# FASCICULE DE BREVET EUROPEEN

(11) **EP 0 533 566 B1**
(45) Date de publication et mention de la délivrance du brevet: **08.05.1996**
(21) Numéro de dépôt: 92402544.8
(22) Date de dépôt: 17.09.1992
(51) Int. Cl.: F16B 5/02, E06B 3/54

(54) **Moyen de fixation sur un vitrage percé au préalable**
Befestigungseinrichtung für vorgebohrte Glasscheiben
Fixing means on previously pierced glazing

(30) Priorité: 17.09.1991 DE 4130823; 08.11.1991 FR 9113774
(43) Date de publication de la demande: 24.03.1993
(73) Titulaire: SAINT-GOBAIN VITRAGE, F-92400 Courbevoie (FR); VEGLA Vereinigte Glaswerke GmbH, D-52066 Aachen (DE)
(72) Inventeur: Scherzl, Hans, W-5010 Bergheim/ahe (DE); Le Lievre, Patrick, F-60300 Apremont (FR)
(74) Mandataire: Breton, Jean-Claude

(56) Documents cités:
- EP-A- 0 089 298
- EP-A- 0 277 535
- FR-A- 809 628
- FR-A- 1 194 985
- FR-A- 2 446 400
- FR-A- 2 473 101
- GB-A- 703 034
- GB-A- 1 122 512
- US-A- 2 277 885
- US-A- 4 528 783

## Description

L'invention concerne un vitrage muni d'au moins un élément d'assemblage ou de fixation disposé dans un trou percé au préalable dans le vitrage. (voir FR-A 2 473 101)

L'invention concerne également un vitrage muni d'au moins un élément fonctionnel monté solidairement sur ledit vitrage ainsi que cet élément fonctionnel et sa fixation sur le vitrage.

Les éléments fonctionnels peuvent être des éléments servant au fonctionnement du vitrage tels des patins de guidage, des alimentations électriques... Ils peuvent aussi être des éléments servant au montage du vitrage dans une baie, comme par exemple des vis, des écrous...

Pour fixer ces éléments au vitrage ou pour fixer le vitrage à un support, on peut utiliser différentes techniques. Ainsi on peut fixer l'élément fonctionnel à l'aide de vis pouvant traverser le vitrage, ou encore à l'aide de moyens de pincement agissant sur les bords du vitrage.

Ces techniques engendrent un encombrement sur les deux faces du vitrage ; elles créent notamment des surépaisseurs particulièrement gênantes lorsqu'il s'agit d'un vitrage automobile. C'est le cas, par exemple, d'une fixation mécanique par pincement utilisée pour fixer un patin de guidage d'un vitrage coulissant. On utilise un patin muni de deux lèvres élastiques venant pincer le bord du vitrage et d'ergots s'enfonçant dans un trou percé dans le vitrage. Cette solution simple et facile à mettre en oeuvre crée cependant une surépaisseur gênante. Cette fixation, en outre, ne s'applique qu'en bord de vitrage.

D'autres techniques, telles le collage ou le surmoulage, ne présentent pas ces inconvénients. Elles nécessitent cependant toutes plusieurs opérations supplémentaires à l'opération de fixation proprement dite. Ces opérations supplémentaires sont coûteuses en temps et en main d'oeuvre.

On connaît aussi un mode de fixation par exemple décrit dans le brevet EP 0 277 535 à l'aide de vis à tête fraisée de telle sorte que la surface plane de la tête fraisée de la vis affleure au vitrage.

Or, lors d'un assemblage par un vissage, des contraintes axiales s'exercent sur le vitrage risquant d'endommager ce dernier, en particulier au voisinage des trous percés dans ledit vitrage. De telles contraintes peuvent notamment conduire à une déformation des couches intermédiaires en matière plastique constituant un vitrage feuilleté.

L'invention a pour objet un élément d'assemblage ou de fixation pour un vitrage utilisable de manière polyvalente, et notamment pour un vitrage composite, sans que s'exercent des efforts nuisibles sur ledit vitrage lors de sa fixation à un support ou à un élément fonctionnel.

Conformément à l'invention cet objectif est atteint par les charactéristiques de la revendication 1.

Des modes particuliers de réalisation de l'invention sont indiqués dans les revendications dépendantes 2-5.

Les avantages et caractéristiques de l'invention apparaîtront dans la suite de la description faite en référence aux figures dans lesquelles :
- la figure 1 montre une première forme de réalisation d'un élément d'assemblage conforme à l'invention, dans une vue explosée avant la fixation dans le trou d'un vitrage,
- la figure 2 montre la forme de réalisation de la fig. 1 après sa fixation dans le trou d'un vitrage,
- la figure 3 représente une deuxième forme de réalisation d'un élément d'assemblage conforme à l'invention,
- la figure 4 illustre une forme de réalisation d'un élément d'assemblage conforme à l'invention qui est entièrement logé à l'intérieur du trou,
- la figure 5 montre une autre forme de réalisation d'un élément d'assemblage qui est logé entièrement à l'intérieur du trou,
- la figure 6 représente une forme de réalisation d'un élément d'assemblage avec un noyau du genre d'une cheville expansible,
- la figure 7 montre un élément de construction en verre pour une façade entièrement vitrée avec plusieurs éléments d'assemblage conformes à l'invention,
- la figure 8 représente une section longitudinale d'un patin de guidage avant sa fixation sur un vitrage coulissant,
- la figure 9 représente le même patin de guidage qu'à la figure 8, fixé sur le vitrage,
- la figure 10 représente un rivet selon l'invention vu du dessus,
- et la figure 11 est une coupe longitudinale selon la ligne A de la figure 10.

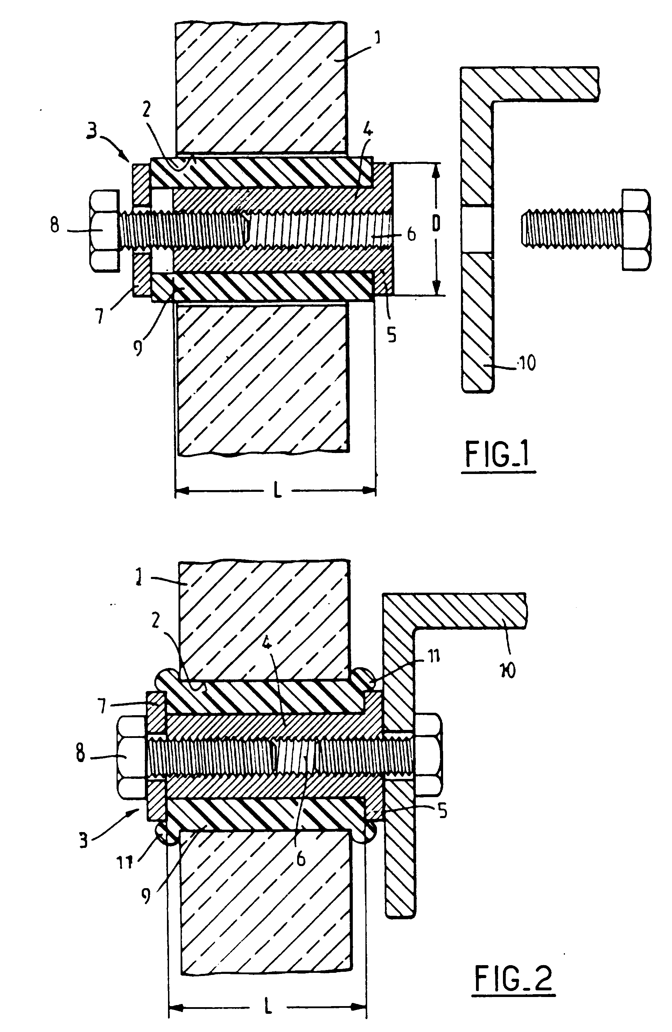

Dans chacune des fig. 1 et 2 est représentée une vitre monolithique 1, avec un trou 2 dans lequel doit être disposé un élément de fixation 3, qui sert par exemple pour la fixation de la vitre 1 à un support profilé 10.

L'élément de fixation 3 se compose d'un corps cylindrique 4 en un métal approprié comme le fer, le cuivre ou l'aluminium, avec un collet 5 formé à une extrémité et un filet intérieur 6 sur toute sa longueur, une rondelle perforée 7, qui a le même diamètre que le collet 5, une vis 8, avec laquelle la rondelle est vissée au corps cylindrique 4, et un corps cylindrique creux 9 en un élastomère non compressible.

Le collet 5 du corps cylindrique 4 a, exactement comme la rondelle 7, un diamètre extérieur D qui est plus petit que le diamètre intérieur du trou foré 2. La longueur L du corps cylindrique 4 est légèrement plus grande que l'épaisseur de la vitre 1. Après le placement du corps cylindrique creux élastique 9 et du corps cylindrique 4 constituant le noyau métallique dans le trou foré, la rondelle 7 est fixée par vissage à l'aide de la vis 8 jusqu'à butée sur le corps cylindrique 4. Pendant cette opération, le corps cylindrique creux 9 est refoulé en direction axiale, il se déforme aussi en direction radiale et il est fortement pressé contre le corps cylindrique 4 et contre la surface intérieure du trou foré 2 tout en remplissant entièrement la cavité entre le corps cylindrique 4 et la surface intérieure du trou foré 2. La matière élastique constituant les faces d'extrémité du corps cylindrique creux 9 est refoulée hors de la fente annulaire située entre le trou foré et le collet 5 respectivement la rondelle 7, et elle forme ainsi un bourrelet 11.

Après la fixation du dispositif dans le trou foré, le filet intérieur 6 dans le corps cylindrique 4 reste accessible du côté où se trouve le collet 5, et il sert à la fixation par vissage de l'objet qui doit être assemblé à la vitre. Dans le cas illustré, le support profilé 10 est vissé au corps cylindrique 4 au moyen d'une vis 12.

L'assemblage mécanique ainsi réalisé présente non seulement une robustesse extraordinairement élevée, mais il présente en outre une souplesse relativement grande, de sorte que de tels assemblages conviennent très avantageusement pour les applications où certains mouvements entre la vitre et le support rigide sont souhaitables ou même invévitables par exemple dans les revêtements de façades par suite des efforts dus au vent.

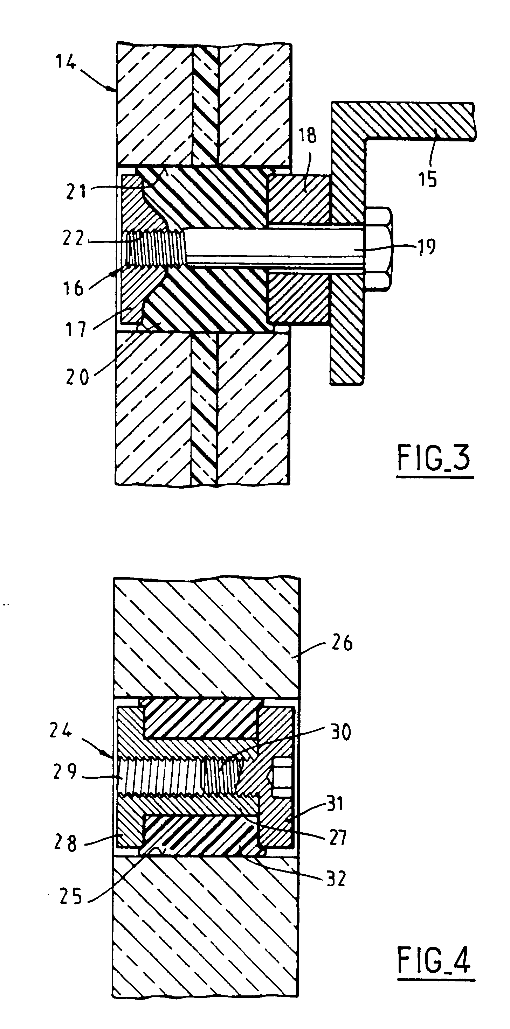

Dans la fig. 3, on a représenté la fixation d'une vitre composite 14 à un support profilé 15 à l'aide d'un élément de fixation 16 conforme à l'invention. Dans ce cas, l'élément de fixation 16 comprend une rondelle filetée 17, un corps de rondelle 18, un boulon à visser 19 et un corps cylindrique creux 20 qui, sous l'effet des forces de pression exercées par la rondelle 17 et le corps de rondelle 18, est pressé en direction radiale contre la tige du boulon 19 et contre la surface intérieure 21 du trou foré. Dans ce cas, le filetage intérieur 22 dans le corps de rondelle 17 sert d'élément d'assemblage ou de fixation, et il sert en même temps à produire les forces de pression axiales nécessaires. L'épaisseur de la rondelle 17 et du corps de rondelle 18, ainsi que la disposition de l'élément de fixation à l'intérieur du trou, sont choisies de telle sorte que la surface extérieure de la rondelle 17 se trouve dans le plan de la surface de la vitre 14, de sorte qu'aucune partie de l'élément de fixation ne se trouve en saillie de ce côté par rapport à la surface de la vitre. Le corps de rondelle 18 présente au contraire une plus forte épaisseur et il est disposé de telle sorte que le support profilé 15, auquel la vitre composite 14 est fixée, ne vienne pas en contact avec la vitre même en cas de mouvements angulaires de la vitre 14. Le boulon à visser 19 sert en même temps aussi bien pour la fixation de la vitre au support profilé que pour le serrage de la rondelle 17 avec le corps de rondelle 18.

Dans la variante de réalisation représentée dans la figure 4, l'élément de fixation 24 est constitué et dimensionné de telle manière que, comme tel, il soit placé entièrement à l'intérieur du trou foré 25 et qu'il ne présente aucune partie en saillie par rapport aux surfaces de la vitre 26. Il se compose à nouveau d'un corps cylindrique 27 avec un collet 28 et un filetage 29, ainsi que d'une rondelle 31 pourvue d'une vis sans tête 30, qui sont vissées l'une à l'autre avec interposition du corps cylindrique creux 32. Les dimensions du corps cylindrique 27 et de la rondelle 31 sont choisies en correspondance avec l'épaisseur de la vitre 26, et aussi les dimensions du corps cylindrique creux déformable 32. Dans ce cas également, le corps cylindrique creux 32 est constitué d'un élastomère incompressible approprié. Le filetage intérieur 29 du corps cylindrique 27 sert à la fixation par vissage de l'élément de construction ou de l'objet qui doit être assemblé à la vitre 26.

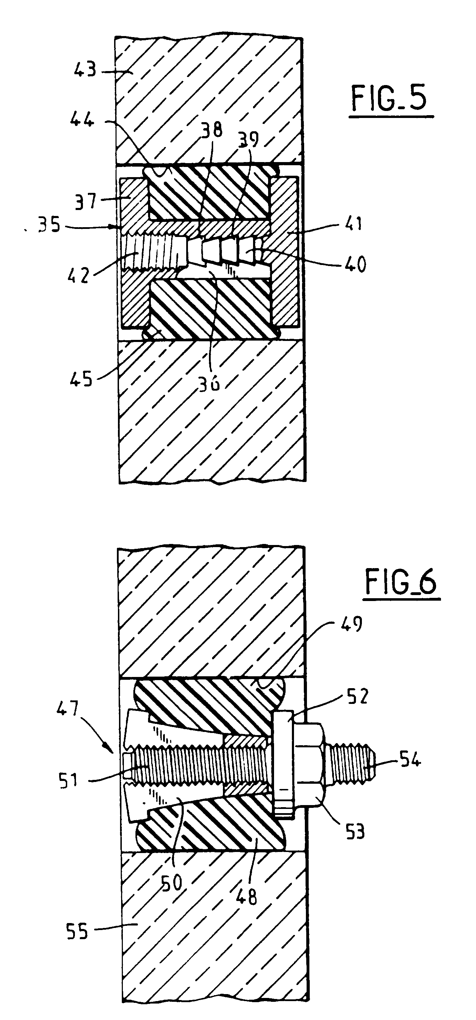

Comme le montre l'élément de fixation 35 représenté dans la figure 5, l'assemblage vissé entre les parties de l'élément de fixation, représenté jusqu'ici, peut être remplacé par un assemblage du genre d'un bouton à pression ou par un assemblage à rivets ou cavaliers. Dans ce cas, le corps cylindrique 36, qui est à nouveau pourvu à une extrémité d'une butée 37 en forme de collet, est, dans sa partie cylindrique située en face de la butée 37, creux et pourvu intérieurement de rainures 38 en dents de scie. Dans ces rainures 38 s'engagent les ergots correspondants 39 de la broche 40, qui est disposée sur la rondelle 41. Le corps cylindrique 36 peut être fendu ou être rendu élastique de toute autre manière, de telle sorte que la broche dentée 40 est amenée par la pression dans la position finale représentée. Le corps cylindrique 36 est pourvu, sur le côté de la butée 37 en forme de collet, d'un trou fileté central 42 qui sert de moyen de fixation pour le raccordement de la partie correspondante à la vitre 43. Entre le corps cylindrique 36 constituant le noyau métallique de l'élément de fixation et la surface intérieure 44 du trou dans la vitre 43 est à nouveau disposé le corps annulaire 45 en un élastomère non compressible, qui se dilate en direction radiale sous l'effort de refoulement exercé par les deux rondelles 37 et 41 et assure ainsi la ferme fixation de l'élément. Ces assemblages à pression sont relativement simples à manipuler et donnent la situation finale désirée, immédiatement après leur assemblage mutuel, de sorte qu'ils conviennent particulièrement bien pour une utilisation en série.

Une autre forme de réalisation d'un élément de fixation 47 conforme à l'invention est illustré dans la figure 6. Dans ce cas, la déformation radiale du corps annulaire 48, qui conduit à l'assemblage géométriquement et dynamiquement bloqué avec la surface intérieure du trou 49, est suscitée par le corps cylindrique 50 du genre d'une cheville expansible, qui est expansée en direction radiale par rotation du boulon à visser 51. Dans le cas représenté, le corps à visser pourvu du boulon à visser 51 présente une butée 52 en forme de rondelle, qui limite la déformation du corps cylindrique creux déformable 48 en direction axiale. Par ailleurs, le corps à visser est pourvu d'une portée à six pans 53 et d'une tige filetée 54, qui sert pour le raccordement de la partie à fixer à la vitre 55.

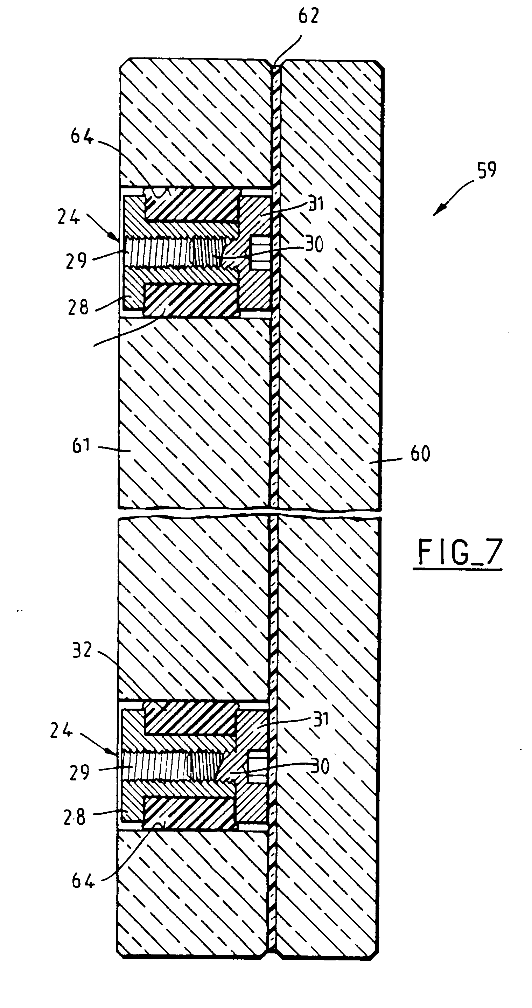

La figure 7 montre un élément de construction en verre 59 pour une façade entièrement vitrée, qui est fixé à la construction porteuse à l'aide d'éléments d'assemblage qui ont été décrits en relation avec la figure 4. L'élément de construction en verre se compose d'une vitre de silicate extérieure 60 et d'une vitre de silicate intérieure 61, qui sont assemblées l'une à l'autre par une couche intermédiaire 62 en matière plastique thermoplastique. La vitre en silicate extérieure 60 est par exemple constituée de verre flotté usuel. Elle peut être pourvue, sur une de ses surfaces, d'une couche fonctionnelle, par exemple d'une couche partiellement réfléchissante. La vitre extérieure 60 peut également être constituée de verre refroidi normalement, c'est-à-dire sans précontrainte, ou au lieu de celui-ci aussi de verre précontraint plus ou moins fortement. La précontrainte doit présenter un niveau suffisamment élevé, pour conférer à la vitre l'augmentation désirée de résistance à la flexion.

La vitre intérieure 61 se compose par exemple de verre flotté précontraint d'une épaisseur de 8 à 12 mm. Elle est pourvue, au voisinage de chacun de ses quatre coins, d'un trou foré dans chacun desquels est logé un élément d'assemblage 24. Etant donné que l'élément d'assemblage 24 ne dépasse pas la surface assemblée avec la couche intermédiaire 62, il n'est pas nécessaire de prendre la moindre précaution pour assembler les deux vitres 60 et 61 avec la couche intermédiaire 62.

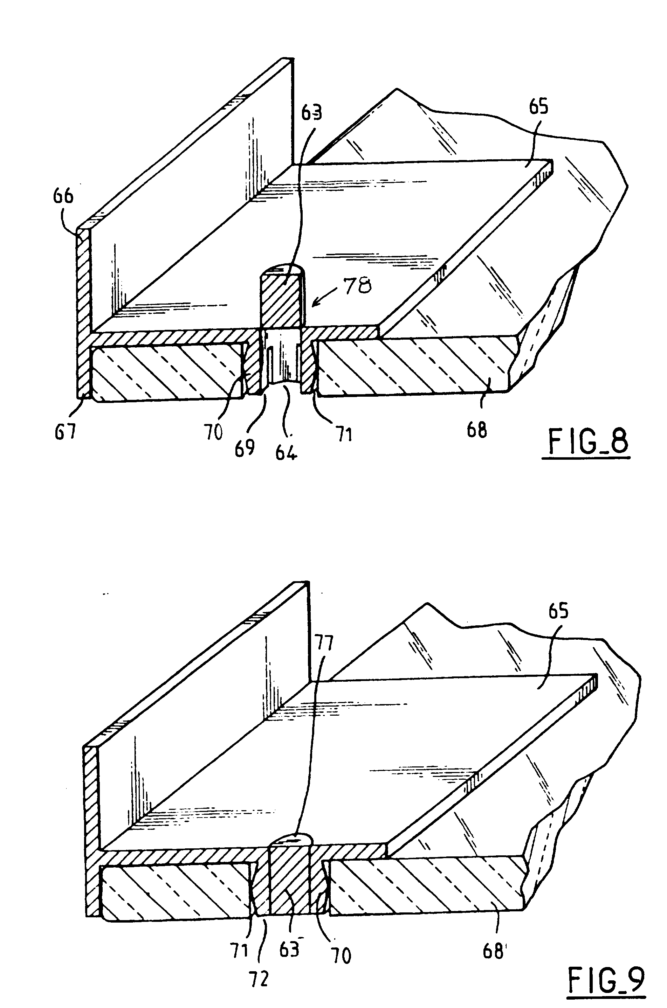

Les figures 8 à 11 représentent un élément de fixation 78 particulièrement avantageux selon l'invention.

Sur la figure 8 l'élément de fixation 78 comprend un mandrin d'écartement 63, de forme cylindrique, et un fût 64, se situant de part et d'autre de la base 65 d'un élément fonctionnel, ici un patin de guidage. L'élément de fixation 78 est solidaire de l'élément fonctionnel (même pièce). Ce dernier assure sa fonction de guidage grâce à une aile 66 qui peut coulisser dans une rainure, ou une glissière, prévue dans la baie de montage du vitrage. Une deuxième aile 67 permet de positionner le patin de guidage sur le vitrage 68 lors de sa fixation. Un trou 71 est percé dans le vitrage 68. Le fût 64 et ses parties 70 pouvant s'écarter sont représentées en position dans le trou 71.

L'enfoncement du mandrin 63 d'un diamètre légèrement supérieur à celui correspondant à l'espace évidé 69 constituant le centre du fût provoque des forces radiales appliquant fortement les segments 70 sur les parois de l'orifice 71, comme le montre la figure 9.

Cette même figure met en évidence l'affleurement du patin de guidage vis-à-vis du vitrage, en 72. De même aucune partie saillante n'est présente sur la base 65 du patin de guidage, particulièrement à l'emplacement de la fixation en 77.

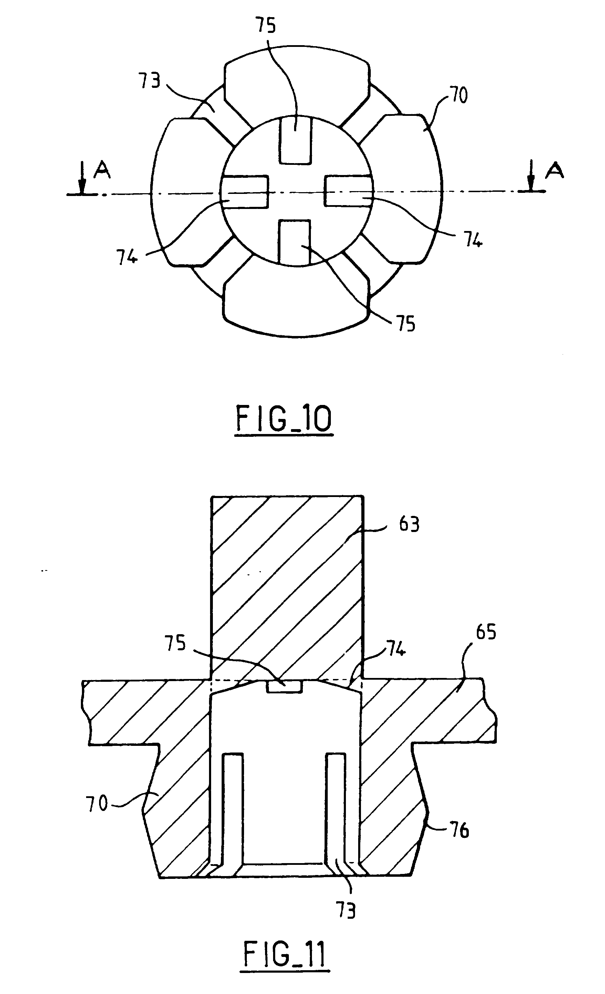

La figure 10 représente une vue détaillée de la partie formant rivet assurant la fixation d'un élément fonctionnel, solidaire du rivet, sur un vitrage. Le fût 64 est constitué de quatre segments 70 pouvant s'écarter. Chacun de ces segments est séparé de l'autre par un interstice 73.

Quatre petites languettes de matière 74 et 75 retiennent le mandrin d'écartement 63 hors du fût, avant son enfoncement. Elles sont détruites lors de l'enfoncement du mandrin 63 dans le fût 64.

La figure 11 montre la forme extérieure biconique 76 des segments 70 constituant le fût. Cette forme facilite l'introduction du fût dans le trou et contrôle les efforts radiaux exercés lors de l'enfoncement du mandrin 63 dans le fût 64 afin d'appliquer chacun des segments 70 sur les parois d'un trou prévu dans le vitrage.

Un vitrage coulissant pour automobile peut être ainsi équipé de deux patins de guidage disposés sur deux côtés opposés. Ces patins guident le vitrage lors de son mouvement en montée-baisse dans des glissières prévues dans la carrosserie automobile.

## Revendications

1. Vitrage muni d'au moins un élément de fixation (3, 16, 24, 35, 47) comportant notamment un corps annulaire (9, 20, 32, 45, 48) en un matériau susceptible de s'appliquer contre les parois d'un trou (2, 21, 25, 44, 49) percé au préalable dans le vitrage **caractérisé en ce que** l'élément de fixation comporte deux corps de rondelle (5, 7, 17, 18, 28, 31, 37, 41) en contact avec les deux extrémités du corps annulaire (9, 20, 32, 45, 48) en un matériau déformable et incompressible et qui peuvent être serrés l'un vers l'autre.

2. Vitrage suivant la revendication 1, **caractérisé en ce que** les corps de rondelle (5, 7, 17, 18, 28, 31, 37, 41) présentent un diamètre plus petit que celui du trou foré dans la vitre.

3. Vitrage suivant la revendication 1 ou 2, **caractérisé en ce qu'**il est prévu un assemblage à vis pour le serrage mutuel des corps de rondelle (5, 7, 17, 18, 28, 31).

4. Vitrage suivant la revendication 1 ou 2, **caractérisé en ce qu'**il est prévu un assemblage à cavaliers ou à rivets pour le serrage mutuel des corps de rondelle (37, 41).

5. Vitrage suivant l'une ou l'autre des revendications 1 à 4, **caractérisé en ce que** le vitrage (61) pourvu d'éléments d'assemblage ou de fixation (24) est assemblé à une autre vitre (60) au moyen d'une couche intermédiaire (62) pour former un élément de construction (59) en vitrage composite.

## Patentansprüche

1. Glasscheibe mit wenigstens einem Befestigungselement (3,16,24,35,47), das insbesondere einen Ringkörper (9,20,32,45,48) aus einem sich gegen die Wände eines zuvor in die Glasscheibe gebohrten Loches (2,21,25,44,49) anschmiegbaren Material umfaßt, **dadurch gekennzeichnet,** daß das Befestigungselement zwei Scheibenkörper (5,7,17,18,28,31,37,41) umfaßt, die mit den beiden Enden des aus einem verformbaren und inkompressiblen Material bestehenden Ringkörpers (9,20,32,45,48) in Kontakt stehen und gegeneinander verspannbar sind.

2. Glasscheibe nach Anspruch 1, dadurch gekennzeichnet, daß die Scheibenkörper (5,7,17,18,31,37,41) einen kleineren Durchmesser aufweisen als das in die Glasscheibe gebohrte Loch.

3. Glasscheibe nach Anspruch 1 oder 2, dadurch gekennzeichnet, daß zum gegenseitigen Verspannen der Scheibenkörper (5,7,17,18,28,31) eine Schraubverbindung vorgesehen ist.

4. Glasscheibe nach Anspruch 1 oder 2, dadurch gekennzeichnet, daß zum gegenseitigen Verspannen der Scheibenkörper (37,41) eine Steck- oder Nietverbindung vorgesehen ist.

5. Glasscheibe nach einem der Ansprüche 1 bis 4, dadurch gekennzeichnet, daß zur Bildung eines Bauelements (59) aus Verbundglas die mit Verbindungs- oder Befestigungselementen (24) versehene Glasscheibe (61) mittels einer Zwischenschicht (62) mit einer weiteren Glasscheibe (60) verbunden ist.

## Claims

1. Pane equipped with at least one fixing element (3, 16, 24, 35, 47) comprising, notably, an annular body (9, 20, 32, 45, 48) of a material capable of bearing against the wall faces of a hole (2, 21, 25, 44, 49) previously formed or drilled through the pane, characterized in that the fixing element comprises two disc bodies (5, 7, 17, 18, 28, 31, 37, 41) in contact with the two ends of the annular body (9, 20, 32, 45, 48) of a deformable and incompressible material, and which can be tightened towards each other.

2. Pane according to claim 1, characterized in that the disc bodies (5, 7, 17, 18, 28, 31, 37, 41) have a diameter smaller than that of the hole drilled through the sheet.

3. Pane according to claim 1 or 2, characterized in that a screw assembly is provided for the mutual tightening of the disc bodies (5, 7, 17, 18, 28, 31).

4. Pane according to claim 1 or 2, characterized in that an assembly comprising staples or rivets is provided for the mutual tightening of the disc bodies (37,41).

5. Pane according to one or another of claim 1 to 4, characterized in that the pane (61), provided with assembling or fixing elements (24), is assembled together with another sheet (60) by means of an intermediate layer (62) to form a construction element (59) of a composite pane.
